**Europäisches Patentamt**

**European Patent Office**

**Office européen des brevets**

(11) Publication number: **0 139 008**
**B1**

# EUROPEAN PATENT SPECIFICATION

(45) Date of publication of patent specification: **09.05.90**

(51) Int. Cl.⁵: **G 11 B 5/127, G 11 B 5/147**

(21) Application number: **84900748.9**

(22) Date of filing: **09.02.84**

(86) International application number:
**PCT/JP84/00037**

(87) International publication number:
**WO 84/03167 16.08.84 Gazette 84/20**

(54) MAGNETIC HEAD.

(30) Priority: **10.02.83 JP 20623/83**

(43) Date of publication of application:
**02.05.85 Bulletin 85/18**

(45) Publication of the grant of the patent:
**09.05.90 Bulletin 90/19**

(84) Designated Contracting States:
**DE FR GB**

(56) References cited:
**EP-A-0 030 625**
**EP-A-0 061 290**
**JP-A-5 720 910**
**JP-A-5 766 611**
**JP-A-52 139 410**
**JP-A-57 179 925**

**PATENTS ABSTRACTS OF JAPAN, vol. 7, no. 26
(P-172)1171r, 2nd February 1983; & JP - A - 57
179 926**

**PATENTS ABSTRACTS OF JAPAN, vol. 6, no.
155 (E-125)1033r, 17th August 1982; & JP - A - 57
78 108**

(73) Proprietor: **Matsushita Electric Industrial Co.,
Ltd.
1006, Oaza Kadoma
Kadoma-shi Osaka-fu, 571 (JP)**

(72) Inventor: **SATOMI, Mitsuo
52-4, Kisabe 6-chome Katano-shi
Osaka-fu 576 (JP)**
Inventor: **KUROE, Akio
10-2, Nanseidai 4-chome Katano-shi
Osaka-fu 576 (JP)**
Inventor: **SAWAI, Eisuke
1-507, Kuzuhahanazonocho 5-chome Hirakata-
shi
Osaka-fu 573 (JP)**
Inventor: **HIGASHIONJI, Masaru
26-8, Kisabenishi 3-chome Katano-shi
Osaka-fu 576 (JP)**
Inventor: **SAKAKIMA, Hiroshi
28-15, Katahokohonmachi Hirakata-shi
Osaka-fu 573 (JP)**
Inventor: **KONDO, Kenji
3-11-409, Daitocho 3-chome Miyakojima-ku
Osaka-shi
Osaka-fu 534 (JP)**

(74) Representative: **Eisenführ, Speiser & Strasse
Martinistrasse 24
D-2800 Bremen 1 (DE)**

Note: Within nine months from the publication of the mention of the grant of the European patent, any person may
give notice to the European Patent Office of opposition to the European patent granted. Notice of opposition shall
be filed in a written reasoned statement. It shall not be deemed to have been filed until the opposition fee has been
paid. (Art. 99(1) European patent convention).

**Description**

The invention relates to a magnetic head having a magnetic core comprising a first substrate of non-magnetic material, at least one layer of an amorphous magnetic alloy material directly formed on said first substrate; and a second substrate of non-magnetic material bonded to said layer of amorphous magnetic alloy material by a bonding glass layer formed of a glass material containing lead and having a low melting point.

Conventionally, an alloy material such as permalloy, sendust or the like or ferrite has been employed as a core material for use in a magnetic head. The ferrite among these materials is the best of quality in wear resistance at present, but has a fault of inferiority to the alloy material with raising a problem in the magnetic saturation of the head core material when the ferrite has been used in the high-density recording medium of high coercive force available in recent years, because the saturation magnetic-flux density $B_s$ is lower by 30 through 50% as compared with the alloy material. On the other hand, the alloy material is inferior in wear to the ferrite, but is superior in $B_s$.

From such a point of view as described hereinabove, an amorphous magnetic alloy is the limelight as a material, which is superior in both the wear resistance and magnetic property. Generally, the amorphous magnetic alloy is difficult to be made thicker because of the manufacturing method, and thus, it is grasped from both sides with non-magnetic substrates in constructing the magnetic head core, thereby to render to secure the mechanical strength thereof. Accordingly, the bonding art is extremely important.

In the ferrite magnetic head, glass bonding is normally used, while, in the alloy material, the bonding is performed with the use of a silver-solder material. And the operation temperature for them is normally 700°C or more. However, in the amorphous alloy, it is necessary to be operated normally at 500°C or lower through consideration of the magnetic characteristics because of the crystallization temperature (hereinafter referred to as Tx) of the material itself. Namely, if the amorphous magnetic alloy is adapted to heat at Tx or higher, the alloy is crystallized and becomes fragile, and, simultaneously, the magnetic characteristics become deteriorated so that the amorphous magnetic alloy cannot be used as the magnetic material. Accordingly, for the bonding of the head core material or the forming of the magnetic gap, in the use of the amorphous material it is desirable to use so-called bonding agent such as ordinary epoxy resin or the like or to perform the bonding operation with the use of a soldering material. Although it is safe in that it is not crstallized the low bonding strength is disadvantageous, because the operation temperature during these bonding operations is at most 300°C or lower.

An audio head has no serious problem, because the track width is wide and the magnetic gap length is wide. However, in the video tape recorder, the computer, data recorder, it is difficult to maintain a precise width of the magnetic gap with the bonding or the soldering material, because the track width is extremely small (for example, tens of micrometers) and the magnetic gap length is extremely small (for example, 0.3 micrometer or lower).

Accordingly, to maintain the magnetic gap of high precision, the bonding with the use of glass is most reliable. However, when the magnetic head is constructed of the amorphous magnetic alloy, the performance of the bonding operation and the magnetic gap formation is desirable to be performed at 500°C or lower because of the above-described reason, and, accordingly, the glass material of low melting point of 500°C or less is required. The glass of such a low softening point contains a lot of lead as such as PbO in the component element. When the glass was employed as glass for bonding use, magnetic gap forming use in the head construction, there was a disadvantage, such that the yield during the working operation becomes extremely low. It was found out that oxidizing, reducing reactions were caused between the PbO in the glass and the metal in the amorphous magnetic alloy in the interface between the amorphous magnetic alloy and the glass for bonding use to liberate the metallic lead from the inside of the glass, thus resulting in considerable reduction of the bonding strength.

It is an object of the present invention to avoid deterioration of the bonding glass layer.

This object is being solved by providing a protective layer of non-magnetic ceramic material between said layer of amorphous magnetic alloy material and said bonding glass layer for preventing deterioration of said bonding glass layer.

Preferable solutions according to the invention are defined in the dependent claims.

Brief description of the drawings

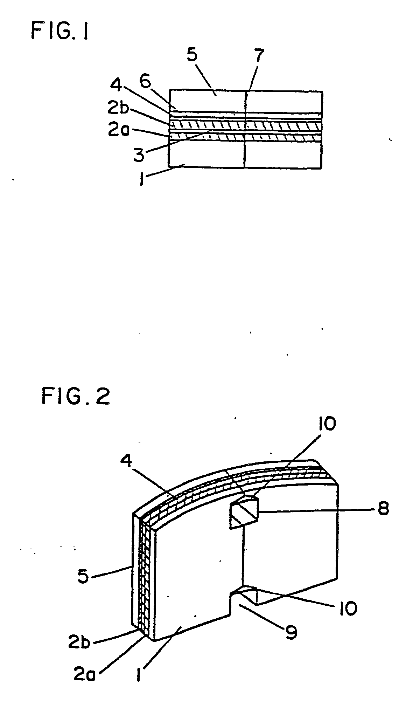

Fig. 1 is a cross-sectional view in one embodiment of a magnetic head in accordance with the present invention. Fig. 2 is a perspective view thereof.

Best form for embodying the invention

The present invention can be applied in the embodiment shown in Fig. 1 and Fig. 2. Referring to Figs. 1 and 2, a reference numeral 1 is a non-magnetic substrate, on which the layers 2a, 2b of the amorphous magnetic alloy are formed. As the layers 2a, 2b of the amorphous magnetic alloy are formed by the spattering and a layer insulation 3 composed of such as $SiO_2$ is provided between both spatter layers 2a, 2b. A non-magnetic ceramic layer 4 is provided on the amorphous magnetic alloy spatter layer 2b. A reference numeral 5 is a non-magnetic substrate, which is bonded on the non-magnetic ceramic layer 4 with the bonding glass layer 6. A pair of cores of such construction as described hereinabove form a magnetic gap 7 and are bonded. A reference numeral 8 is a coil winding groove. A reference numeral 9 is a glass receiver groove. The bonding operation with the bonding glass 10 is performed in both grooves.

Each of the components will be described hereinafter in further detail.

The glass of high melting point (600°C through 700°C in softening temperature) which is put on the market is polished on mirror face, and is sufficiently washed into substrate 1. After the interior of the vacuum cell is exhausted into $3.9 \cdot 10^{-5}$ Pa, Ar gas is introduced into 2.6 Pa, and, then, about three hours' spattering is performed on the substrate 1 with the use of a target of $Co_{81}Nb_{13}Zr_6$ in composition. Thickness of the formed amorphous magnetic alloy spatter layer 2a is approximately 10 micrometers according to the measurement by a stage difference meter. Also, the Tx of the formed amorphous magnetic alloy spatter layer 2a is 540°C according to the measurement through the differential thermal analyzer. Then, the spattering is performed, for about thirty minutes with 5.2 Pa in Ar gas pressure, on the amorphous magnetic alloy spatter layer 2a with $SiO_2$ as a target thereby to form a layer insulation 3. The thickness of the formed $SiO_2$ layer is approximately $10^{-7}$ m. Then, the spattering is performed for about three hours on the same conditions as described hereinabove with the $Co_{81}Nb_{13}Zr_6$ as a target as described hereinabove, thus producing an amorphous magnetic alloy spatter layer 2b.

Furthermore, the spattering is performed, for thirty minutes through one hundred and fifty minutes on the same conditions as that of the formation of the layer insulation 3, on the amorphous magnetic alloy spatter layer 2b with $SiO_2$ as a target, so that the $SiO_2$ layer of $10^{-7}$ m through $5 \cdot 10^{-7}$ m in thickness is formed as a non-magnetic ceramic layer 4. Glass (PbO: 84, $B_2O_3$: 11, $SiO_2$: 3, $Al_2O_3$: 2, each weight %, approximately 350°C in softening temperature) powder of lead series low-melting point put on the market is applied upon the surfaces thereof and is raised in temperature to 450°C in argon atmosphere. Thereafter it is retained for thirty minutes and is cooled to the room temperature. According to the analysis through the X ray analysis of the film surface, metal lead is detected from the glass on the film when the non-magnetic ceramic layer 4 had the thickness of $10^{-7}$ m through $2 \cdot 10^{-7}$ m. As the metal lead is not detected when the layer has the thickness of $3 \cdot 10^{-7}$ m or more, the non-magnetic ceramic layer 4 is desirable to have $3 \cdot 10^{-7}$ m or more. A block having two-layer amorphous alloy layer is provided on the substrate 1. Such glass of low melting point as described hereinabove is applied about 2 micrometer on the substrate 5 of the same material as that of the other substrate 1. Thereafter it is burnt at 480°C in air for thirty minutes to have a glass layer 6 for bonding use provided. In addition, a block of substrates 1 and 5 is heated at 450°C in Ar atmosphere with the glass layer 6 for bonding use and the non-magnetic ceramic layer 4 being butted with respect to each other, so that a built-up core is provided.

Then, a coil winding groove 8 and a glass receiving groove 9 are machined on the gap 7 forming face. Thereafter, the butt face is machined into the mirror face with diamond paste. And $SiO_2$ which is a gap spacer material is formed on the butt face, to thickness half as thick as the desired magnetic gap with spattering, with the coil winding groove 8 and the glass receiving groove 9 being masked. A non-magnetic ceramic layer (not shown) is formed into thickness of approximately $3 \cdot 10^{-7}$ m, by spattering, on the surfaces of the coil-winding groove 8 and the glass receiving groove 9 with the face being masked. After the spattering, the mask is removed to complete the one side for forming the magnetic gap.

A pair of built-up cores of such construction as described hereinabove are butted against each other. The glass rod, of low melting point, put on the market is inserted into the two grooves to form the magnetic gap. The head yield through the observation of break-away or some slackness is shown in a table given hereinbelow, which is caused in the portion of the bonding glass 6 during the machining operation in a process to be completed into a head in such a manner as described hereinabove. The table shows, also, the yield of the magnetic head of the conventional construction for reference use. This shows the results in a case where the non-magnetic ceramic layer has the thickness of $3 \cdot 10^{-7}$ m.

| Non-magnetic ceramic layer between amorphous magnetic alloy spatter layer and bonding glass | Yield (%) |
| --- | --- |
| none (conventional) | 20 |
| $SiO_2$ | 80 |
| $Al_2O_3$ | 85 |
| titanium-barium oxide | 97 |
| forsterite | 98 |
| $ZrO_2$ | 85 |
| $TiO_2$ | 90 |
| WC | 83 |
| TiC | 81 |
| SiC | 85 |
| titanium-calcium oxide | 95 |

A non-magnetic ceramic layer is interposed between the amorphous magnetic alloy spatter layer and the bonding glass as described hereinabove so that the head yield by the machining operation can be remarkably improved as compared with the conventional products. Also, these materials can be used even if two kinds or more, not single, are combined. The thickness of the non-magnetic ceramic layer is desired to be larger in the isolation between the amorphous alloy and the bonding glass. But to be too thick results in lowered yield, considering the difference in thermal expansion among the respective materials. Considering the practical use, $3 \cdot 10^{-7}$ m through $5 \cdot 10^{-7}$ m are desirable. An oxide series is desirable as the material of the non-magnetic ceramic layer, because it has better familiarity with the bonding glass.

In the above-described example, the amorphous alloy two-layer construction has been described. It is better to optionally select the thickness, built-up number of the amorphous magnetic alloy spatter layer by the track width, the frequency band.

To form the layer of the amorphous magnetic alloy, a rapidly quenched ribbon can be used, in addition to such spattering as in the above described embodiment. The spattering is preferred, because the adhering strength of the non-magnetic ceramic layer to be formed thereon is high. In addition, in the case of the amorphous alloy layer formed by the spattering, the composition of the metal-metal series can be used, thus resulting in superior wear resistance, corrosion-resistance.

The composition preferable as glass for constructing the bonding glass layer contains 50 through 90% PbO by weight %, at least $SiO_2$, $Al_2O_3$ and $BaO_3$ in the rest. The PbO of 50% or less has unfavorable influence in that the melting point is higher enough to cause the amorphous alloy to be crystallized during the bonding operation. When the PbO is of 90% or more, devitrification is undesirably caused.

Utilization field in industry:

The magnetic head of the present invention is great in utility as the head for the VTR, computer terminal, data recorder using the high density recording medium, because the bonding strength between the non-magnetic substrate and the amorphous magnetic alloy spatter layer is strong, thus realizing magnetic heads reliable particularly in the narrow track.

## Claims

1. A magnetic head having a magnetic core comprising a first substrate (1) of non-magnetic material, at least one layer (2a, 2b) of an amorphous magnetic alloy material directly formed on said first substrate (1); and a second substrate (5) of non-magnetic material bonded to said layer (2a, 2b) of amorphous magnetic alloy material by a bonding glass layer (6) formed of a glass material containing lead and having a low melting point; characterized by a protective layer (4) of non-magnetic ceramic material between said layer (2a, 2b) of amorphous magnetic alloy material and said bonding glass layer (6) for preventing deterioration of said bonding glass layer.

2. A magnetic head as claimed in claim 1, characterized in that said protective layer (4) has a thickness of $2 \cdot 10^{-7}$ to $5 \cdot 10^{-7}$ m.

3. A magnetic head as claimed in claim 1 or 2, wherein said protective layer (4) is composed of at least one material selected from a group composed of $SiO_2$, $Al_2O_3$, $TiO_2$, $ZrO_2$, titanium-barium oxide, forsterite, WC, TiC, SiC and titanium-calcium oxide.

4. A magnetic head as claimed in claim 1 or 2, wherein said protective layer (4) is composed of ceramic oxide.

5. A magnetic head as claimed in claim 1 or 2, wherein the softening temperature of said lead-containing, low-melting point bonding glass layer (6) is 500°C or lower.

6. A magnetic head as claimed in claim 1 or 2, wherein said lead-containing, low-melting point bonding glass layer (6) has a composition of 50 to 90 weight % of PbO and the remainder at least $SiO_2$, $Al_2O_3$ and $B_2O_3$.

7. A magnetic head as claimed in claim 1 or 2, wherein said protective layer (4) is formed by a sputtering operation.

8. A magnetic head as claimed in claim 1 or 2, wherein said layer (2a, 2b) of amorphous magnetic alloy material comprises a laminated structure formed of plural layers (2a, 3, 2b).

9. A magnetic head as claimed in claim 8, wherein said layer (2a, 2b) of amorphous magnetic alloy material comprises a Co-Nb series alloy.

10. A magnetic head as claimed in claim 9, wherein said Co-Nb series alloy is a Co-Nb-Zr series alloy.

## Patentansprüche

1. Magnetkopf mit einem Magnetkern, der aus einem ersten Substrat (1) aus nichtmagnetischem Material und mindestens einer Schicht (2a, 2b) eines amorphen Magnetlegierungsmaterials, die direkt auf das erste Substrat (1) aufgebracht ist, sowie einem zweiten Substrat (5) aus nichtmagnetischem Material, das mit der Schicht (2a, 2b) des amorphen Magnetlegierungsmaterials durch eine Glasschicht (6) verbunden ist, wobei die Glasschicht Blei enthält und einen niedrigen Schmelzpunkt hat, gekennzeichnet durch eine Schutzschicht (4) aus nichtmagnetischem Keramikmaterial zwischen der Schicht (2a, 2b) des amorphen Magnetlegierungsmaterials und der Glasverbindungsschicht (6) zur Verhinderung einer Schädigung der Glasverbindungsschicht.

2. Magnetkopf nach Anspruch 1, dadurch gekennzeichnet, daß die Schutzschicht (4) eine Dicke von $2 \cdot 10^{-7}$ bis $5 \cdot 10^{-7}$ m hat.

3. Magnetkopf nach Anspruch 1 oder 2, dadurch gekennzeichnet, daß die Schutzschicht (4) aus mindestens einem Material ausgewählt aus einer Gruppe bestehend aus $SiO_2$, $Al_2O_3$, $TiO_2$, $ZrO_2$, Titanium-Bariumoxyd, Forsterit, WC, TiC, SiC und Titan-Kalziumoxyd besteht.

4. Magnetkopf nach Anspruch 1 oder 2, dadurch gekennzeichnet, daß die Schutzschicht (4) aus einem Keramikoxyd besteht.

5. Magnetkopf nach Anspruch 1 oder 2, dadurch gekennzeichnet, daß die Erweichungstemperatur der Blei enthaltenden Glasverbindungsschicht (6) mit niedrigem Schmelzpunkt bei 500°C oder niedriger liegt.

6. Magnetkopf nach Anspruch 1 oder 2, dadurch gekennzeichnet, daß die Blei enthaltende Glasverbindungsschicht (6) mit niedrigem Schmelzpunkt aus einer Verbindung von 50 bis 90 Gew.% PbO besteht, während der Rest zumindest aus $SiO_2$, $Al_2O_3$ und $B_2O_3$ besteht.

7. Magnetkopf nach Anspruch 1 oder 2, dadurch gekennzeichnet, daß die Schutzschicht durch einen Sputtervorgang aufgebracht ist.

8. Magnetkopf nach Anspruch 1 oder 2, dadurch gekennzeichnet, daß die Schicht aus amorphem Magnetlegierungsmaterial einen laminierten Aufbau hat, der aus einer Mehrzahl von Schichten (2a, 3, 2b) besteht.

9. Magnetkopf nach Anspruch 8, dadurch gekennzeichnet, daß die Schicht (2a, 2b) amorphem Magnetlegierungsmaterials aus einer Co-Nb-Serienlegierung besteht.

10. Magnetkopf nach Anspruch 9, dadurch gekennzeichnet, daß die Co-Nb-Serienlegierung eine Co-Nb-Zr-Serienlegierung ist.

## Revendications

1. Une tête magnétique ayant un noyau magnétique comprenant un premier substrat (1) en un matériau non magnétique, au moins une couche (2a, 2b) d'un alliage magnétique amorphe formée directement sur ledit premier substrat (1); et un second substrat (5) en un matériau non magnétique lié à ladite couche (2a, 2b) en alliage magnétique amorphe par une couche de verre de liaison (6) formée en un verre contenant du plomb et ayant un bas point de fusion; caractérisée par une couche protectrice (4) en un matériau céramique non magnétique disposée entre ladite couche (2a, 2b) en alliage magnétique amorphe et ladite couche de verre de liaison (6) pour empêcher la détérioration de ladite couche de verre de liaison.

2. Une tête magnétique selon la revendication 1, caractérisé en ce que ladite couche protectrice (4) a une épaisseur de $2 \cdot 10^{-7}$ à $5 \cdot 10^{-7}$ m.

3. Une tête magnétique selon la revendication 1 ou 2, selon laquelle ladite couche protectrice (4) est composée d'au moins un matériau choisi dans le groupe composé de $SiO_2$, $Al_2O_3$, $TiO_2$, $ZrO_2$, oxyde de baryum-titane, forstérite, WC, TiC, SiC et oxyde de calcium-titane.

4. Une tête magnétique selon la revendication 1 ou 2, selon laquelle ladite couche protectrice (4) est composée d'oxyde de céramique.

5. Une tête magnétique selon la revendication 1 ou 2, selon laquelle la température de ramollissement de ladite couche (6) de verre de liaison à bas point de fusion, contenant du plomb est de 500°C ou moins.

6. Une tête magnétique selon la revendication 1 ou 2, selon laquelle ladite couche (6) de verre de liaison à bas point de fusion, contenant du plomb, a une composition de 50 à 90% en poids de PbO et le restant étant au moins du $SiO_2$, du $Al_2O_3$ et du $B_2O_3$.

7. Une tête magnétique selon la revendication 1 ou 2, selon laquelle ladite couche protectrice (4) est formée par une opération de pulvérisation cathodique.

8. Une tête magnétique selon la revendication 1 ou 2, selon laquelle ladite couche (2a, 2b) en alliage magnétique amorphe comprend une structure stratifiée formée de plusieurs couches (2a, 3, 2b).

9. Une tête magnétique selon la revendication 8, selon laquelle ladite couche (2a, 2b) en alliage magnétique amorphe comprend un alliage de la série Co-Nb.

10. Une tête magnétique selon la revendication 9, selon laquelle ledit alliage de la série Co-Nb est un alliage de la série Co-Nb-Zr.

EP 0 139 008 B1

FIG. 1

FIG. 2